# EUROPÄISCHE PATENTSCHRIFT

(11) **EP 3 420 163 B1**
(45) Veröffentlichungstag und Bekanntmachung des Hinweises auf die Patenterteilung: **16.12.2020**
(21) Anmeldenummer: 17705294.1
(22) Anmeldetag: 24.01.2017
(51) Int. Cl.: E05B 17/10, E05B 81/54, E05B 81/66, B60Q 3/217, E05B 81/06, B60Q 3/80

(54) **KRAFTFAHRZEUGSCHLIESSEINRICHTUNG**
MOTOR VEHICLE LOCKING MECHANISM
DISPOSITIF DE FERMETURE DE VÉHICULE À MOTEUR

(30) Priorität: 26.02.2016 DE 102016103422
(43) Veröffentlichungstag der Anmeldung: 02.01.2019
(73) Patentinhaber: Kiekert AG, 42579 Heiligenhaus (DE)
(72) Erfinder: BENDEL, Thorsten, 46149 Oberhausen (DE); NOTTEBAUM, Thorsten, 64367 Mühltal (DE)
(86) Internationale Anmeldenummer: PCT/DE2017/100040
(87) Internationale Veröffentlichungsnummer: WO 2017/144044

(56) Entgegenhaltungen:
- WO-A1-2004/113654
- DE-U1-202006 004 187
- US-B1- 6 420 799

## Beschreibung

Die Erfindung betrifft eine Kraftfahrzeugschließeinrichtung, insbesondere ein Kraftfahrzeugtürschloss, aufweisend eine Steuereinheit, mindestens einen elektrischen Antrieb, wobei der Antrieb mittels der Steuereinheit ansteuerbar ist, mindestens einem, der Schließeinrichtung zugeordneten Leuchtmittel, wobei das Leuchtmittel in Abhängigkeit eines, mittels der Steuereinheit erfassbaren Status der Schließeinrichtung und/oder einer die Schließeinrichtung aufnehmenden Fahrzeugkomponente ansteuerbar ist, und mit Spannungsversorgungsleitungen, über der mindestens eine elektrische Antrieb und das mindestens eine Leuchtmittel mit Strom versorgt werden können, wobei das Leuchtmittel in einen Schaltkreis des elektrischen Antriebs integriert ist.

Um ein Höchstmaß an Sicherheit für im Straßenverkehr eingesetzte Kraftfahrzeuge zu erreichen, gibt es eine Reihe von Sicherheitsvorschriften. Insbesondere die Beleuchtung eines Kraftfahrzeugs ist in den vergangenen Jahren mehr und mehr in den Vordergrund gerückt. So gibt es heute bereits Fahrzeuge, die über ein Fahrlicht verfügen, das unabhängig vom Abblendlicht, mit dem in der Dunkelheit gefahren wird, auch bei Tag das Fahrzeug illuminiert und sich somit für die Verkehrsteilnehmer besser sichtbar gestaltet. Das Licht am Kraftfahrzeug ist somit ein sicherheitsrelevantes Merkmal.

Zur weiteren Erhöhung der Sicherheit für den Fahrzeugführer wie auch weiterer Verkehrsteilnehmer ist es darüber hinaus bekannt, eine sich öffnende Tür und/oder Klappe eines Kraftfahrzeugs mit einem Leuchtmittel, Reflektoren oder lumineszierenden Bestandteilen auszuführen, so dass den weiteren Verkehrsteilnehmern mittels eines Lichteffekts die Bewegungen am Kraftfahrzeug anzeigbar sind.

Aus der DE 39 08 995 A1 sind Rückleuchten und Reflektoren bekannt, die auf ein Öffnen der Tür hinweisen bzw. während des Öffnens der Tür entweder ein auf die Tür fallendes Licht reflektieren oder selbst als Leuchtmittel anzeigen, dass die Tür geöffnet ist. Offenbart ist ein Türeinrichtungselement, das mit verschiedenen Lichtern, wie beispielsweise einer Leseleuchte, einer Rückleuchte und einer Bodenleuchte ausgestattet ist. Dabei kann auch eine Rückleuchte in einem Rand des Einlaufschlitzes integriert sein, wobei der Einlaufschlitz gleichmäßig erweitert wurde. All diese Maßnahmen dienen dazu, die Verkehrsteilnehmer auf eine geöffnete oder sich öffnende Tür hinzuweisen und somit die Sicherheit des Verkehrs zu gewährleisten.

Aus der DE 20 2008 005 174 U1 ist eine Kraftfahrzeugschlossanordnung für eine Kraftfahrzeugtür bekannt geworden, bei der das Kraftfahrzeugschloss mit einer Leuchtanordnung ausgebildet ist, wobei die Leuchtanordnung eine elektrische Lichtquelle aufweist, deren Lichtstrahlung über ein Leuchtelement abgebbar ist. Bevorzugt ist eine Lichtquelle offenbart, die mit einem Lichtleiter zusammenwirkt, die das Licht der Lichtquelle an ein Leuchtelement weiterleitet, wobei das Leuchtelement eine Optik zur Abgabe der Lichtstrahlung umfasst.

Zur Ansteuerung der Leuchtmittel ist es aus der WO 2004/113654 A1 bekannt geworden, eine Leuchtdiode im Bereich des Kraftfahrzeugschlosses und insbesondere im Einlaufmaul des Schlosses anzuordnen. Beim Öffnen der Tür wird der Status des Schlosses überwacht oder der Status des Türgriffes ermittelt, mittels einer Steuerelektronik erfasst und das Leuchtmittel angesteuert. Ein Mikroprozessor mit einer Steuerelektronik arbeitet dabei mit Schaltern und elektrischen Antrieben zusammen, wobei die Steuerelektronik den Status des Schlosses bzw. der Tür überwacht und ein Öffnen der Tür erkennt, wodurch gleichzeitig das Leuchtmittel ansteuerbar ist.

Aus der Druckschrift US 6,420,799 B1 ist ein Kraftfahrzeugtürschloss mit einer Steuereinheit, einem durch die Steuereinheit ansteuerbaren Antrieb und einem zugeordneten Leuchtmittel, das in einen Schaltkreis des elektrischen Antriebs integriert ist und das in Abhängigkeit eines mittels der Steuereinheit erfassbaren Status ansteuerbar ist.

Die aus dem Stand der Technik bekannten Ansteuerungen zur Bestromung der Leuchtmittel weisen dabei den Nachteil auf, dass das Leuchtmittel mittels eines separaten Strompfads mit Strom versorgt wird. Separate Strompfade benötigen Bauraum, verkomplizieren den Aufbau von Leiterbahngebilden und sind auf erweiterte Steckerpins bzw. Belegungen angewiesen.

Aufgabe der Erfindung ist es, eine verbesserte Kraftfahrzeugschließeinrichtung bereitzustellen, die die Nachteile des Standes der Technik überwindet. Darüber hinaus ist es Aufgabe der Erfindung, eine konstruktiv einfachere und kostengünstigere Lösung zur Ansteuerung eines Leuchtmittels in einer Kraftfahrzeugschließeinrichtung bereitzustellen.

Die Lösung der Aufgabe erfolgt erfindungsgemäß durch die Merkmale des unabhängigen Patentanspruchs 1. Vorteilhafte Ausgestaltungen der Erfindung sind in den Unteransprüchen angegeben.

Gemäß dem Patentanspruch 1 wird die Aufgabe der Erfindung dadurch gelöst, dass eine Kraftfahrzeugschließeinrichtung bereitgestellt wird, aufweisend eine Steuereinheit, mindestens einen elektrischen Antrieb, wobei der Antrieb mittels der Steuereinheit ansteuerbar ist, mindestens einem der Schließeinrichtung zuordbaren Leuchtmittel, wobei das Leuchtmittel in Abhängigkeit eines, mittels der Steuereinheit erfassbaren Status der Schließeinrichtung und/oder-einer die Schließeinrichtung aufnehmenden Fahrzeugkomponente ansteuerbar ist, und mit Spannungsversorgungsleitungen, über der mindestens eine elektrische Antrieb und das mindestens eine Leuchtmittel mit Strom versorgt werden können, wobei das Leuchtmittel in dem Schaltkreis des elektrischen Antriebs integriert ist, wobei mittels der Steuereinheit zur Ansteuerung des Leuchtmittels alle Spannungsversorgungsleitungen des zumindest einen elektrischen Antriebs und das in einen Schaltkreis des elektrischen Antriebs integrierte Leuchtmittel mit Spannung versorgt werden. Durch die Integration des Leuchtmittels in den Schaltkreis des oder der elektrischen Antriebe ist nunmehr die Möglichkeit geschaffen, eine verbesserte Kraftfahrzeugschließeinrichtung bereitzustellen, bei der eine geringere Anzahl von Leiterbahnen benötigt wird, so dass der konstruktive Aufwand, insbesondere zur Auslegung der elektronischen Anbindung des Leuchtmittels, vereinfacht wird. Zur Ansteuerung bzw. Bestromung der elektrischen Antriebe in der Kraftfahrzeugschließeinrichtung müssen Steuer- bzw. Spannungsversorgungsleitungen in der Schließeinrichtung vorhanden sein, die nun erfindungsgemäß gleichzeitig zur Bestromung des Leuchtmittels verwendet werden und somit einer weiteren Funktion in der Schließeinrichtung zugeordnet werden. Die Leiterbahnen zur Bestromung der elektrischen Antriebe besitzen somit eine Doppelfunktion.

Einerseits dienen die Leiterbahnen zur Bestromung der Antriebe und andererseits werden die Leiterbahnen der elektrischen Antriebe in Kombination mit der Steuerelektronik zur Ansteuerung des Leuchtmittels verwendet. Dies ist insbesondere dadurch möglich, weil die elektrischen Antriebe zum Teil lediglich temporär angesteuert werden bzw. mit einer Spannung versorgt werden, um zum Beispiel eine vom Bediener erwünschte Funktionsstellung in der Schließeinrichtung herzustellen bzw. einzulegen. Nach dem Betätigen bzw. Einlegen der Funktionsstellung mittels des elektrischen Antriebs liegt der elektrische Antrieb wieder unbestromt bzw. ohne Spannungsversorgung vor.

Bei der Kraftfahrzeugschließeinrichtung handelt es sich bevorzugt um ein Kraftfahrzeugtürschloss. Das Kraftfahrzeugtürschloss ist zum Beispiel in einer Tür, Klappe, Schiebetür, Abdeckung und/oder einem Ablagefach verwendbar und kann überall dort im Kraftfahrzeug zur Anwendung kommen, wo mittels einer Schließeinrichtung am Fahrzeug befindliche Bauteile beweglich angeordnet sind. Dabei arbeitet die Schließeinrichtung mit einer im Kraftfahrzeug vorgesehenen Steuereinheit zusammen, die auch als Steuerelektronik bezeichenbar ist und bevorzugt einen Mikroprozessor zur Verarbeitung der im Fahrzeug erzeugten Signale aufweist. Signale im Fahrzeug können beispielsweise ein über einen Mikroschalter generiertes Statussignal sein, ob der Mikroschalter beschaltet oder unbeschaltet vorliegt. Je nach Signal des Mikroschalters kann dabei zum Beispiel die Lage einer einem Gesperre in der Schließeinrichtung zugeordneten Drehfalle erfassbar sein. Sämtliche Steuer- und Statussignale werden in der Steuereinheit gesammelt und zur Ansteuerung der Antriebe bzw. der Leuchtmittel verwendet.

Der Schließeinrichtung ist zumindest ein elektrischer Antrieb zugeordnet. Der elektrische Antrieb kann beispielsweise ein Elektromotor zur Ansteuerung einer elektrischen Kindersicherung, einer Verriegelungseinheit und/oder einer Diebstahlsicherung sein. Diese Aufzählung ist natürlich nicht abschließend, sondern soll lediglich beispielhaft auf den Einsatz der elektrischen Antriebe und die Möglichkeit der durch den elektrischen Antrieb einstellbaren Funktionen im Schloss hinweisen. Für die Erfindung wesentlich ist hierbei, dass die für den elektrischen Antrieb verwendeten strom- bzw. spannungsführenden Leitungen gleichzeitig zur Strom- bzw. Spannungsversorgung des Leuchtmittels verwendet werden.

Als Leuchtmittel kommen bevorzugt lichtemittierende Dioden zum Einsatz. Diese lichtemittierenden Dioden haben den Vorteil, dass sie kleinstbauend, kostengünstig und robust genug sind, um in einem Kraftfahrzeug und beispielsweise in einer Kraftfahrzeugseitentür zum Einsatz zu kommen. Das Leuchtmittel wird dabei in Abhängigkeit eines mittels der Steuereinheit erfassten Status der Schließeinrichtung und/oder einer die Schließeinrichtung aufnehmenden Fahrzeugkomponente angesteuert. Die Steuereinheit erfasst dabei zum Beispiel das Öffnen einer Klappe am Kraftfahrzeug und gibt ein Steuersignal an das Leuchtmittel weiter, so dass mittels des Leuchtmittels die weiteren Verkehrsteilnehmer auf das Bewegen der Fahrzeugkomponente hingewiesen werden.

In einer Ausführungsform der Erfindung sind mindestens zwei Antriebe, insbesondere elektrische Antriebe, mittels der Steuereinheit ansteuerbar. In vorteilhafter Weise kann das Leuchtmittel in einen Schaltkreis eines elektrischen Antriebs, von zwei elektrischen Antrieben oder mehreren elektrischen Antrieben integriert sein. Gemäß der Erfindung benötigt die Ansteuerung des Leuchtmittels lediglich einen stromführenden Leiter, wobei die Stromversorgung der elektrischen Antriebe nutzbar ist. Die elektrischen Antriebe werden lediglich punktuell bzw. temporär angesteuert, so dass während des geöffneten Zustandes des die Schließeinrichtung tragenden Bauteils des Kraftfahrzeugs die elektrischen Antriebe zumeist nicht bestromt werden, da die Schließeinrichtung lediglich wieder nach beim Schließen des Bauteils wieder seine Funktion aufnimmt. Während des geöffneten Zustands des Bauteils, wie beispielsweise einer Klappe oder einer Tür, wird die elektronische Versorgung der Antriebe nicht benötigt und kann zur Bestromung des Leuchtmittels genutzt werden.

Ist der Status der Schließeinrichtung und/oder der die Schließeinrichtung aufnehmenden Fahrzeugkomponente mittels mindestens eines Mikroschalters erfassbar, so ergibt sich eine weitere vorteilhafte Ausgestaltungsform der Erfindung. Die Schließeinrichtung ist beispielsweise ein Kraftfahrzeugtürschloss. Die Fahrzeugkomponente kann beispielsweise eine Heckklappe oder eine Schiebetür sein. Vorteilhaft ist es dabei, dass die Stellung bzw. der Status der Schließeinrichtung und/oder der Fahrzeugkomponente mittels Mikroschaltern erfasst wird. Mikroschalter sind kostengünstig und leicht in Bauteile des Kraftfahrzeugs zu integrieren. Darüber hinaus ist eine Auswertung mittels der Steuereinheit leicht möglich und liefert ein sicheres Signal über den Status, so dass eine verlässliche Beschaltung des Leuchtmittels ermöglicht wird. So kann beispielsweise mittels eines Mikroschalters die Lage einer einem Gesperre zugeordneten Sperrklinke erfasst werden, wodurch ein eindeutiges Signal mittels des Mikroschalters generiert werden kann, ob sich das Gesperre und somit die Schließeinrichtung in einer gesperrten oder entsperrten Position befindet.

Eine gesperrte Position liegt beispielsweise dann vor, wenn eine Schiebetür geschlossen ist. Wird die Schiebetür beispielsweise mittels einer Handhabe, wie beispielsweise einem Schiebetüraußengriff, geöffnet, so wird das Gesperre entsperrt, wodurch ein mit dem Gesperre zusammenwirkender Schlosshalter frei kommt und die Sperrklinke nimmt eine der entsperrten Position des Gesperres entsprechenden Stellung ein. Die Stellung der Sperrklinke wird dabei mittels des Mikroschalters erfasst, so dass mittels der Steuereinheit das Leuchtmittel ansteuerbar ist.

In einer weiteren vorteilhaften Ausgestaltungsform der Erfindung sind der zumindest eine elektrische Antrieb und das zumindest eine Leuchtmittel in einen gemeinsamen Schaltkreis eingebunden. Neben einer Anzahl von Antrieben, die wie oben beschrieben, zum Beispiel eine elektrische Kindersicherung einlegen können, können auch mehrere Leuchtmittel in der Schließeinrichtung zum Einsatz kommen. Vorteilhaft ist es dabei, dass das Leuchtmittel in einem Schaltkreis mit dem Antrieb eingebunden ist. Dies reduziert in vorteilhafter Weise die Anzahl der benötigten Schaltkreise, so dass eine reduzierte Anzahl von Schaltkreisen benötigt wird, was wiederum den Schaltplan vereinfacht. Insbesondere vorteilhaft ist es dahingehend, da für unterschiedliche Anordnungen der Schließeinrichtungen zum Beispiel spiegelbildliche Schaltpläne notwendig sind, die dann vereinfacht werden können. Spiegelbildliche Anordnungen von Schaltplänen bzw. Schaltkreisen sind beispielsweise dann notwendig, wenn eine Schließeinrichtung mit einem Leuchtmittel auf einer Fahrerseite und eine weitere Schließeinrichtung mit einem Leuchtmittel auf einer Beifahrerseite zum Einsatz kommen soll.

In einer weiteren vorteilhaften Ausgestaltungsform der Erfindung ist zumindest eine Spannungsversorgung umschaltbar, insbesondere zwischen einer Spannungsversorgung und einer Masse umschaltbar ausgebildet. Sind beispielsweise zwei elektrische Antriebe in der Schließeinrichtung vorgesehen, so kann das Leuchtmittel in den Schaltkreis der elektrischen Antriebe integriert sein. Zur Ansteuerung der Motoren steht jeweils eine strom- bzw. spannungsführende Leitung zur Verfügung, und die Motoren sind mit der Masse des Kraftfahrzeugs verbunden. Wird nun das Leuchtmittel in den Schaltkreis bzw. Strompfad eines elektrischen Antriebs eingebunden, so kann mittels der Steuereinheit, nach einem Erfassen des Signals, dass das Leuchtmittel anzuschalten ist, die elektrischen Antriebe einerseits über den stromführenden Pfad bestromen und zusätzlich die auf Masse liegende Leitung ebenfalls bestromen. In diesem Fall würden die elektrischen Antriebe keine Bewegung ausführen.

Eine beidseitige Bestromung der elektrischen Antriebe führt zu einem Stillstand der elektrischen Antriebe. Da das Leuchtmittel aber über eine Masseverbindung verfügt, wird das Leuchtmittel angesteuert bzw. mit Spannung versorgt und ist in der Lage, Licht zu emittieren. Durch das Beschalten der elektrischen Antriebe und insbesondere das Umschalten der Masse zu einem stromführenden Pfad bewirkt, dass die elektrischen Antriebe ohne Funktion bleiben, die Leitungen aber zur Ansteuerung des Leuchtmittels nutzbar sind. Es kann somit auf weitere stromführende Leitungen in der Schließeinrichtung verzichtet werden, da die stromführenden Pfade der elektrischen Antriebe zur Spannungsversorgung des Leuchtmittels zur Verfügung stehen.

Erfindungsgemäß sind mittels der Steuereinheit zur Ansteuerung des Leuchtmittels alle Spannungsversorgungsleitungen unter Spannung bzw. Strom setzbar. Die Steuereinheit ist in der Lage, sämtliche Spannungsversorgungsleitungen der elektrischen Antriebe in der Schließeinrichtung unter Spannung zu setzen. Darüber hinaus ist die Steuereinheit in der Lage, zumindest die Masse für die elektrischen Antriebe ebenfalls unter Spannung zu setzen. Hierdurch ist die Steuereinheit, die dezentral von der Schließeinrichtung im Kraftfahrzeug anordbar ist, umzuschalten, und zwar derart umzuschalten, dass die Motoren über beide Anschlussklemmen mit Strom versorgt werden. Bevorzugt kommen Gleichstrommotoren in Kraftfahrzeugen zum Einsatz.

Gleichstrommotoren sind allgemein bekannt und weisen neben den Anschlussklemmen Bürsten, einen Kommutator und einen Rotor auf, wobei der Rotor im Stator drehbar gelagert ist, so dass eine Rotorwelle antreibbar ist. Werden beide Anschlussklemmen mit Strom versorgt, so führt der elektrische Antrieb und insbesondere der Gleichstrommotor keine Drehbewegung aus. Die Steuereinheit hat somit die Möglichkeit, den elektrischen Antrieb außer Funktion zu setzen und gleichzeitig die Möglichkeit, die Stromversorgungs- bzw. Spannungsversorgungspfade zur Versorgung der Leuchtmittel zu verwenden.

Bevorzugt ist das Leuchtmittel eine LED. Das Leuchtmittel kann darüber hinaus einen Vorspannungsregler aufweisen, so dass Spannungsversorgungsschwankungen im Betriebsnetz des Kraftfahrzeugs ausgleichbar sind. Mittels eines Versorgungsspannungsreglers, der beispielsweise ein Widerstand ist, kann dem Leuchtmittel bzw. der lichtemittierenden Diode eine Spannungsversorgung zugeführt werden, die ein gleichmäßiges Ausleuchten mittels des Leuchtmittels in der Schließeinrichtung ermöglicht. Ist der erfassbare Status mittels einer Drehfalle und/oder einer Sperrklinke zugeordneten Mikroschalters erfassbar, so ergibt sich eine weitere vorteilhafte Ausgestaltungsform der Erfindung. Das Erfassen einer Stellung bzw. eines Status der Drehfalle bzw. der Sperrklinke ermöglicht ein sehr kompaktes Aufbauen der Schließeinrichtung mit einem Leuchtmittel. Drehfalle und/oder Sperrklinke werden in Schließeinrichtungen als Gesperre eingesetzt. Wird der Status, das heißt die Stellung der Drehfalle mittels eines Mikroschalters abgefragt, so ist ein eindeutiges Signal über den Zustand der Schließeinrichtung erfassbar. Als Zustände können ein geöffnetes, das heißt ein entsperrtes Schloss, oder ein geschlossenes, das heißt ein gesperrtes Gesperre, vorliegen.

Aufgabe der Erfindung ist es darüber hinaus auch, ein Verfahren zur Steuerung eines Leuchtmittels in einer Schließeinrichtung bereitzustellen. Diese Aufgabe wird gemäß der Erfindung durch den Patentanspruch 8 gelöst.

Erfindungsgemäß wird ein Verfahren zur Steuerung eines Leuchtmittels in einem Kraftfahrzeugschloss, aufweisend eine Steuereinheit und mindestens einen elektrischen Antrieb, bereitgestellt, bei dem mittels der Steuereinheit ein Status des Schlosses erfasst wird, wobei der Antrieb mittels der Steuereinheit ansteuerbar ist und in Abhängigkeit des erfassten Status alle Anschlüsse eines Antriebs mit Spannung versorgt werden und bei dem das in einem Schaltkreis der Antriebe integrierte Leuchtmittel mit Spannung versorgt wird. Durch das erfindungsgemäße Verfahren ist nun die Möglichkeit geschaffen, auf eine konstruktiv einfache Art und Weise ein Verfahren bereitzustellen, mit dem ein Leuchtmittel in vorhandene Schließsysteme leicht zu integrieren ist. Es ist lediglich mittels des Verfahrens die Masse der Gleichstrommotoren unter Spannung zu setzen, so dass die elektrischen Antriebe keine Drehbewegung erzeugen und somit eine Fehlfunktion der Funktionen in der Schließeinrichtung ausgeschlossen werden.

In einer vorteilhaften Ausgestaltung des Verfahrens wird die Masse des elektrischen Antriebs unter Spannung gesetzt. Die Steuereinheit schaltet hierbei die Masse auf einen stromführenden Pfad und blockiert somit eine Bewegung der elektrischen Antriebe. In der Steuereinheit wird folglich zwischen Masse und Stromversorgung für die Gleichstrommotoren umgeschaltet.

Nachfolgend wird die Erfindung unter Bezugnahme auf die anliegenden Zeichnungen anhand von Ausführungsbeispielen näher erläutert. Es gilt jedoch der Grundsatz, dass die Ausführungsbeispiele die Erfindung nicht beschränken, sondern lediglich vorteilhafte Ausgestaltungsformen darstellen.

Es zeigt:
- Figur 1: einen prinzipiell dargestellten Schaltplan zur Ansteuerung eines Leuchtmittels gemäß dem Stand der Technik,
- Figur 2: eine prinzipielle Darstellung einer Ansteuerung eines Leuchtmittels in einem nicht erfindungsgemäßen Kraftfahrzeug und eine Prinzipskizze einer Schaltung zur Einbindung eines Leuchtmittels in einen stromführenden Pfad bzw. einer Leitung eines elektrischen Antriebs und
- Fig. 3: ein weiteres schematisches Schaltbild eines Kraftfahrzeugschlosses gemäß der Erfindung.

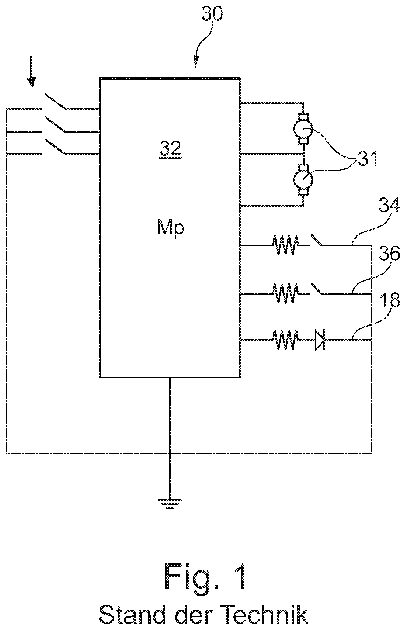

In der Figur 1 ist eine Steuereinheit 30 für ein Kraftfahrzeugschloss in einem Prinzipbild gemäß dem Stand der Technik wiedergegeben. Die Steuereinheit 30 weist einen Mikroprozessor 32 auf, an den elektrische Antriebe 31, Mikroschalter 34, 36 und ein Leuchtmittel 18 angeschlossen sind. Über die Mikroschalter 34, 36 ist einerseits der Status des Türgriffes und andererseits der Status des Schlosses abfragbar. Je nach Status des Schlosses und/oder des Türgriffes ist das Leuchtmittel 18 mittels des Mikroprozessors 32 schaltbar. Darüber hinaus sind mittels des Mikroprozessors 32 die elektrischen Antriebe 31 ansteuerbar. Wie deutlich aus der Figur 1 zu entnehmen, sind für die elektrischen Antriebe 31 und das Leuchtmittel 18 separate Steuerleitungen vorgesehen.

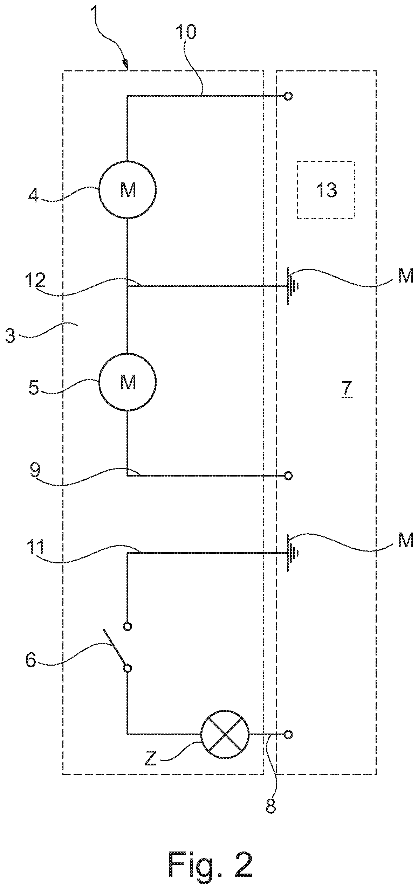

In der Figur 2 ist ein weiter verschematisiertes Schaltbild 1 für eine Ansteuerung eines Leuchtmittels Z eines nur schematisch dargestellten, nicht erfindungsgemäßen Kraftfahrzeugschlosses 3 wiedergegeben. Das Schloss 3 umfasst in diesem Ausführungsbeispiel zwei elektrische Antriebe 4, 5 sowie ein Schaltmittel 6, das beispielsweise ein Mikroschalter sein kann. Über eine Steuereinheit 7 sind die elektrischen Antriebe 4, 5 sowie das Leuchtmittel Z steuerbar. Über Leiterbahnen 8, 9, 10 sind das Leuchtmittel Z sowie die elektrischen Antriebe 4, 5 mit Strom, insbesondere einem Gleichstrom, mit Strom beaufschlagbar. Über die Leiterbahnen 11, 12 sind die elektrischen Antriebe 4, 5 sowie das Leuchtmittel Z mit der Masse M des Kraftfahrzeugs verbunden.

Erhält die Steuereinheit 7, in der beispielsweise ein Mikroprozessor 13 angeordnet ist, ein Schaltsignal vom Schaltmittel 6, so wird über die Leiterbahn 8 das Leuchtmittel Z mit einer Spannung versorgt und eingeschaltet. Das Schaltmittel 6 kann beispielsweise ein Drehfallenschalter sein.

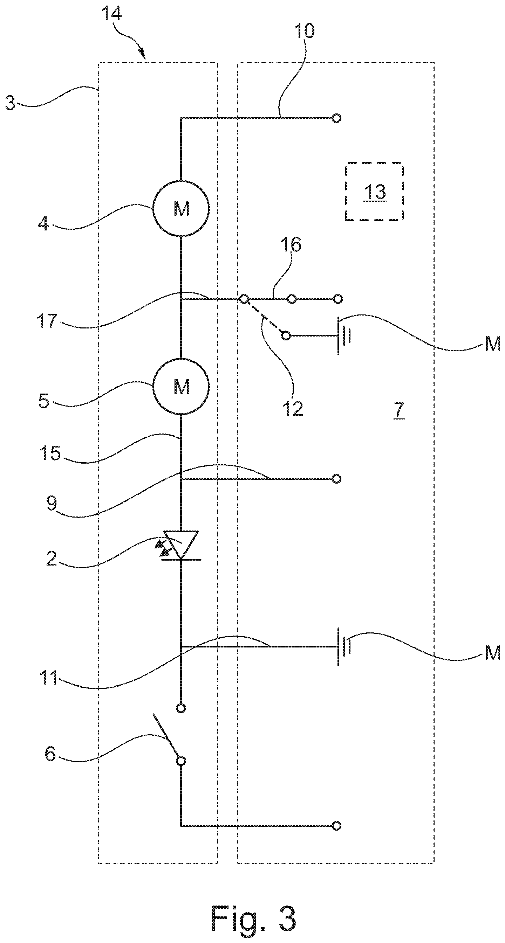

In der Figur 3 ist ein schematisches Schaltbild 14 eines erfindungsgemäßen Kraftfahrzeugschlosses 3 wiedergegeben. Gleiche Bauteile sind mit gleichen Bezugszeichen versehen. Wesentlicher Unterschied ist, dass das Leuchtmittel 2 in den Stromkreis der elektrischen Antriebe 4, 5 eingebunden ist. Der Strompfad 12, der die elektrischen Antriebe 4, 5 mit der Masse M verbindet, ist in diesem Ausführungsbeispiel als gestrichelte Linie wiedergegeben. Mittels eines zum Beispiel Schaltmittels oder einer elektrischen Schalteinrichtung kann die Leiterbahn 17 mit einer Spannung versorgt werden.

Wird beispielsweise mittels des Schaltmittels 6 detektiert, dass das Kraftfahrzeugschloss entsperrt vorliegt und die beispielsweise Tür geöffnet werden kann, so erkennt dies die Steuereinheit 7 und bestromt die Leiterbahnen 9, 10 und 17, wobei das Schaltmittel 16 in den in der Figur 3 dargestellten Position vorliegt. Die elektrischen Antriebe 4, 5 werden nun beidseitig mit einem Gleichstrom versorgt und geraten nicht in Funktion. Das Leuchtmittel 2 erhält einen Gleichstrom über die Leiterbahn 9 und ist über die Leiterbahn 11 mit der Masse M verbunden. Das Leuchtmittel 2 kann somit Licht emittieren und folglich das Kraftfahrzeugschloss 3 ausleuchten und/oder in Richtung des Umfelds des Kraftfahrzeugs leuchten.

Wie deutlich zu erkennen, ist keine separate Leiterbahn 9, 10, 12, 17 für das Leuchtmittel 2 notwendig. Dies führt zu konstruktiv einfacheren und für einen Schaltplan günstigeren Aufbau für ein mit einem Leuchtmittel versehenen Kraftfahrzeugschloss 3.

### Bezugszeichenliste

- 1, 14: Schaltbild
- 2: Leuchtmittel
- 3: Kraftfahrzeugschloss
- 4, 5: elektrische Antriebe
- 6, 16: Schaltmittel
- 7: Steuereinheit
- 8, 9, 10, 11, 12, 17: Leiterbahnen
- 13: Mikroprozessor
- 15: Stromkreis
- 18: Leuchtmittel
- 30: Steuereinheit
- 31: elektrischer Antrieb
- 32: Mikroprozessor
- 34, 36: Mikroschalter

- M: Masse

## Patentansprüche

1. Kraftfahrzeugschließeinrichtung, insbesondere ein Kraftfahrzeugtürschloss (3), aufweisend eine Steuereinheit (7), mindestens einen elektrischen Antrieb (4, 5), wobei der Antrieb (4, 5) mittels der Steuereinheit (7) ansteuerbar ist, mindestens einem, der Schließeinrichtung (3) zuordbaren Leuchtmittel (2), wobei das Leuchtmittel (2) in Abhängigkeit eines mittels der Steuereinheit (7) erfassbaren Status der Schließeinrichtung (3) und/oder einer die Schließeinrichtung (3) aufnehmenden Fahrzeugkomponente ansteuerbar ist, und mit Spannungsversorgungsleitungen (9, 10, 17), über der mindestens eine elektrische Antrieb (4, 5) und das mindestens eine Leuchtmittel (2) mit Strom versorgt werden können, wobei das Leuchtmittel (2) in einen Schaltkreis (1, 14) des elektrischen Antriebs (4, 5) integriert ist, **dadurch gekennzeichnet, dass** mittels der Steuereinheit (7) zur Ansteuerung des Leuchtmittels (2) alle Spannungsversorgungsleitungen (9, 10, 17) des zumindest einen elektrischen Antriebs (4, 5) und das in einen Schaltkreis (1, 14) des elektrischen Antriebs (4, 5) integrierte Leuchtmittel (2) mit Spannung versorgt werden.

2. Kraftfahrzeugschließeinrichtung nach Anspruch 1, **dadurch gekennzeichnet, dass** mindestens zwei Antriebe (4, 5) insbesondere elektrische Antriebe, mittels der Steuereinheit (7) ansteuerbar sind.

3. Kraftfahrzeugschließeinrichtung nach einem der Ansprüche 1 oder 2, **dadurch gekennzeichnet, dass** der Status der Schließeinrichtung (3) und/oder der die Schließeinrichtung (3) aufnehmenden Fahrzeugkomponente mittels eines Mikroschalters (6) erfassbar ist.

4. Kraftfahrzeugschließeinrichtung nach einem der Ansprüche 1 bis 3, **dadurch gekennzeichnet, dass** der Antrieb (4, 5) und das Leuchtmittel (2) in einem gemeinsamen Schaltkreis (14) eingebunden sind.

5. Kraftfahrzeugschließeinrichtung nach einem der Ansprüche 1 bis 4, **dadurch gekennzeichnet, dass** die zumindest eine Spannungsversorgung (9, 10, 17) umschaltbar, insbesondere zwischen einer Spannungsversorgung (9, 10, 17) und einer Masse (M) umschaltbar, ausbildbar ist.

6. Kraftfahrzeugschließeinrichtung nach einem der Ansprüche 1 bis 5, **dadurch gekennzeichnet, dass** das Leuchtmittel (2) eine LED ist.

7. Kraftfahrzeugschließeinrichtung nach einem der Ansprüche 1 bis 6, **dadurch gekennzeichnet, dass** der erfassbare Status mittels mindestens eines einer Drehfalle und/oder einer Sperrklinke zugeordneten Mikroschalter (6) erfassbar ist.

8. Verfahren zur Steuerung eines Leuchtmittels (2) in einem Kraftfahrzeugschloss (3) , aufweisend eine Steuereinheit (7) und mindestens einen elektrischen Antrieb (4, 5), bei dem mittels der Steuereinheit (7) ein Status des Schlosses (3) erfasst wird, wobei der Antrieb (4, 5) mittels der Steuereinheit (7) ansteuerbar ist und in Abhängigkeit des erfassten Status alle Anschlüsse (9, 10, 17) eines Antriebs (4, 5) mit Spannung versorgt werden und bei dem das in einem Schaltkreis (15) der Antriebe (4, 5) integrierte Leuchtmittel (2) mit Spannung versorgt wird.

9. Verfahren nach Anspruch 8, **dadurch gekennzeichnet, dass** die Masse (M) des elektrischen Antriebs (4, 5) unter Spannung gesetzt wird.

## Claims

1. Motor vehicle locking device, in particular a motor vehicle door latch (3), comprising: a control unit (7); at least one electric drive (4, 5), it being possible for the drive (4, 5) to be controlled by means of the control unit (7); at least one lamp (2) that can be assigned to the locking device (3), it being possible for the lamp (2) to be controlled depending on a status of the locking device (3) and/or of a vehicle component incorporating the locking device (3), which status can be detected by means of the control unit (7); and comprising voltage supply lines (9, 10, 17) via which at least one electric drive (4, 5) and the at least one lamp (2) can be supplied with power, the lamp (2) being integrated into a circuit (1, 14) of the electric drive (4, 5); **characterized in that** all voltage supply lines (9, 10, 17) of the at least one electric drive (4, 5) and the lamp (2) integrated in a circuit (1, 14) of the electric drive (4, 5) are supplied with voltage by means of the control unit (7) for controlling the lamp (2).

2. Motor vehicle locking device according to claim 1, **characterized in that** at least two drives (4, 5), in particular electric drives, can be controlled by means of the control unit (7).

3. Motor vehicle locking device according to either claim 1 or claim 2, **characterized in that** the status of the locking device (3) and/or the vehicle component incorporating the locking device (3) can be detected by means of a microswitch (6).

4. Motor vehicle locking device according to any of claims 1 to 3, **characterized in that** the drive (4, 5) and the lamp (2) are integrated in a common circuit (14).

5. Motor vehicle locking device according to any of claims 1 to 4, **characterized in that** the at least one voltage supply (9, 10, 17) can be designed to be switchable, in particular switchable between a voltage supply (9, 10, 17) and a ground (M).

6. Motor vehicle locking device according to any of claims 1 to 5, **characterized in that** the lamp (2) is an LED.

7. Motor vehicle locking device according to any of claims 1 to 6, **characterized in that** the detectable status can be detected by means of at least one microswitch (6) assigned to a catch and/or to a pawl.

8. Method for controlling a lamp (2) in a motor vehicle latch (3) comprising a control unit (7) and at least one electric drive (4, 5), in which a status of the latch (3) is detected by means of the control unit (7), wherein the drive (4, 5) can be controlled by means of the control unit (7) and, depending on the detected status, all connections (9, 10, 17) of its drive (4, 5) are supplied with voltage, and in which method the lamp (2) integrated in a circuit (15) of the drive (4, 5) is supplied with voltage.

9. Method according to claim 8, **characterized in that** the ground (M) of the electric drive (4, 5) is energized.

## Revendications

1. Dispositif de fermeture de véhicule à moteur, en particulier serrure de portière de véhicule à moteur (3), comportant une unité de commande (7), au moins un entraînement électrique (4, 5), l'entraînement (4, 5) pouvant être commandé au moyen de l'unité de commande (7), au moins un moyen d'éclairage (2) qui peut être associé au dispositif de fermeture (3), le moyen d'éclairage (2) pouvant être commandé en fonction d'un statut du dispositif de fermeture (3) et/ou d'un élément du véhicule prenant en charge le dispositif de fermeture (3), lequel statut peut être détecté au moyen de l'unité de commande (7), et comportant des lignes d'alimentation en tension (9, 10, 17), par lesquelles l'au moins un entraînement électrique (4, 5) et l'au moins un moyen d'éclairage (2) peuvent être alimentés en courant, le moyen d'éclairage (2) étant intégré dans un circuit (1, 14) de l'entraînement électrique (4, 5), **caractérisé en ce que** toutes les lignes d'alimentation en tension (9, 10, 17) de l'au moins un entraînement électrique (4, 5) et le moyen d'éclairage (2) intégré dans un circuit (1, 14) de l'entraînement électrique (4, 5) sont alimentés en tension au moyen de l'unité de commande (7) pour la commande du moyen d'éclairage (2).

2. Dispositif de fermeture de véhicule à moteur selon la revendication 1, **caractérisé en ce qu'**au moins deux entraînements (4, 5), en particulier des entraînements électriques, peuvent être commandés au moyen de l'unité de commande (7).

3. Dispositif de fermeture de véhicule à moteur selon l'une des revendications 1 ou 2, **caractérisé en ce que** le statut du dispositif de fermeture (3) et/ou de l'élément du véhicule prenant en charge le dispositif de fermeture (3) peut être détecté au moyen d'un microcommutateur (6).

4. Dispositif de fermeture de véhicule à moteur selon l'une des revendications 1 à 3, **caractérisé en ce que** l'entraînement (4, 5) et le moyen d'éclairage (2) sont intégrés dans un circuit commun (14).

5. Dispositif de fermeture de véhicule à moteur selon l'une des revendications 1 à 4, **caractérisé en ce que** l'au moins une alimentation en tension (9, 10, 17) peut être réalisée de manière commutable, en particulier de manière commutable entre une alimentation en tension (9, 10, 17) et une masse (M).

6. Dispositif de fermeture de véhicule à moteur selon l'une des revendications 1 à 5, **caractérisé en ce que** le moyen d'éclairage (2) est une DEL.

7. Dispositif de fermeture de véhicule à moteur selon l'une des revendications 1 à 6, **caractérisé en ce que** le statut détectable peut être détecté au moyen d'au moins un microcommutateur (6) associé à un loquet rotatif et/ou à un cliquet de verrouillage.

8. Procédé de commande d'un moyen d'éclairage (2) dans une serrure de véhicule à moteur (3), comportant une unité de commande (7) et au moins un entraînement électrique (4, 5), dans lequel un statut de la serrure (3) est détecté au moyen de l'unité de commande (7), l'entraînement (4, 5) pouvant être commandé au moyen de l'unité de commande (7) et, en fonction du statut détecté, toutes les connexions (9, 10, 17) d'un entraînement (4, 5) étant alimentées en tension, et dans lequel le moyen d'éclairage (2) intégré dans un circuit (15) des entraînements (4, 5) est alimenté en tension.

9. Procédé selon la revendication 8, **caractérisé en ce que** la masse (M) de l'entraînement électrique (4, 5) est mise sous tension.
